# EUROPEAN PATENT APPLICATION

(11) **EP 3 843 183 A1**
(43) Date of publication of application: **30.06.2021**
(21) Application number: 19851657.7
(22) Date of filing: 19.08.2019
(51) Int. Cl.: H01M 4/64, H01M 4/66

(54) **COMPOSITION FOR FORMING THIN FILM FOR ENERGY STORAGE DEVICE ELECTRODE, COMPOSITE CURRENT COLLECTOR FOR ENERGY STORAGE DEVICE ELECTRODE, ENERGY STORAGE DEVICE ELECTRODE, AND ENERGY STORAGE DEVICE**

(30) Priority: 23.08.2018 JP 2018156154
(71) Applicant: Nissan Chemical Corporation, Tokyo 103-6119 (JP)
(72) Inventor: YAJIMA, Mari, Funabashi-shi, Chiba 274-0052 (JP); HATANAKA, Tatsuya, Funabashi-shi, Chiba 274-0052 (JP); SAKAIDA, Yasushi, Funabashi-shi, Chiba 274-0052 (JP)
(74) Representative: Mewburn Ellis LLP
(86) International application number: PCT/JP2019/032246
(87) International publication number: WO 2020/040078

(57) **Abstract**

Provided is a composition for forming a thin film for an energy storage device that contains a cationic polymer, and does not contain an electrically conductive carbon material.

## Description

### TECHNICAL FIELD

The present invention relates to a composition for forming a thin film for an energy storage device electrode, a composite current collector for an energy storage device electrode, an energy storage device electrode, and an energy storage device.

### BACKGROUND ART

In recent years, with the growing use of energy storage devices such as lithium-ion secondary batteries and electrical double-layer capacitors, there exists a desire for a lower internal resistance in such devices. One method of addressing this desire has been to place a conductive carbon material-containing undercoat layer between the electrode mixture layer and the current collector, thereby lowering the resistance at the contact interface therebetween (see, for example, Patent Documents 1 and 2). However, when the weight per unit surface area (coating weight) of the undercoat layer is large, the battery becomes heavier and larger in size.

The undercoat layer is also expected to increase adhesion between the electrode mixture layer and the current collector and thereby suppress degradation due to interfacial separation. Conductive carbon materials, being solids (powders), have weak interactions with the current collector and the electrode layer. For the undercoat layer to strongly adhere to the current collector and the electrode layer, it must therefore include an ingredient other than the conductive carbon material which has a high adhesive strength. Yet, as the level of ingredients other than the conductive carbon material increases, the content of electrically insulating ingredients rises, resulting in a decline in the electrical conductivity of the undercoat layer and a loss of the battery resistance-lowering effects. Also, the storage stability of the conductive carbon material-containing dispersions used when forming these undercoat layers is not always good, and problems such as aggregation of the conductive carbon material often arise during storage. Another problem is higher manufacturing costs due to the costs incurred by dispersion treatment itself.

Separately, cationic polymers exhibit a high adhesive strength due to strong electrostatic interactions with anionic polymers. Patent Document 3 reports examples in which cationic polymers are used as carbon nanotube dispersants. However, problems owing to such conductive carbon materials continue to remain, in addition to which it has been necessary to jointly use a diallylamine-based cationic polymer, an anionic surfactant and a nonionic surfactant. Hence there has existed a desire for art which includes a cationic polymer and yet is free of such problems attributable to the conductive carbon material.

### PRIOR ART DOCUMENTS

### PATENT DOCUMENTS

Patent Document 1: JP-A 2010-170965
Patent Document 2: WO 2014/042080
Patent Document 3: JP No. 5403738

### SUMMARY OF INVENTION

### TECHNICAL PROBLEM

The present invention was arrived at in light of the above circumstances. The objects of the invention are to provide a composition for forming a thin film that includes no conductive carbon material and is capable of exhibiting a high adhesion with the electrode mixture layer and the current collector in an energy storage device electrode, a composite current collector having an undercoat layer which includes a thin film obtained from such a composition, an energy storage device electrode having the composite current collector, and an energy storage device having the electrode.

### SOLUTION TO PROBLEM

The inventors have conducted extensive investigations aimed at achieving the above objects. As a result, they have discovered that the above problems can be resolved by using a thin film-forming composition which includes a cationic polymer and does not include a conductive carbon material. This discovery ultimately led to the present invention.

Accordingly, the invention provides the following composition for forming a thin film for an energy storage device electrode, composite current collector for an energy storage device electrode, energy storage device electrode and energy storage device.
1. A composition for forming a thin film for an energy storage device electrode, which composition includes a cationic polymer and contains no electrically conductive carbon material.
2. The composition for forming a thin film for an energy storage device electrode of 1 above, which composition is for use in forming a thin film interposed between a current collector and an electrode mixture layer in an energy storage device electrode.
3. The composition for forming a thin film for an energy storage device electrode of 1 or 2 above, wherein the cationic polymer includes at least one selected from the group consisting of cationic polymers obtained using dicyandiamide as the monomer, cationic polymers obtained using diethylenetriamine as the monomer, cationic polymers obtained using dicyandiamide and diethylenetriamine as the monomers, and cationic polymers obtained using ethyleneimine as the monomer.
4. The composition for forming a thin film for an energy storage device electrode of any of 1 to 3 above, wherein the cationic polymer is a cationic polymer obtained using ethyleneimine as the monomer.
5. The composition for forming a thin film for an energy storage device electrode of any of 1 to 4 above, further including a crosslinking agent.
6. An undercoat layer which includes a thin film obtained from the thin film-forming composition of any of 1 to 5 above.
7. A composite current collector for an energy storage device electrode which includes a current collector and the undercoat layer of 6 above formed on at least one side of the current collector.
8. The composite current collector for an energy storage device electrode of 7 above, wherein the coating weight of the undercoat layer per side of the current collector is 1,000 mg/m² or less.
9. The composite current collector for an energy storage device electrode of 7 or 8 above, wherein the current collector is copper foil or aluminum foil.
10. The composite current collector for an energy storage device electrode of 9 above, wherein the current collector is copper foil.
11. An energy storage device electrode which includes the composite current collector for an energy storage device electrode of any of 7 to 10 above and an electrode mixture layer formed on the undercoat layer.
12. The energy storage device electrode of 11 above which is a negative electrode.
13. An energy storage device which includes the energy storage device electrode of 11 or 12 above.

### ADVANTAGEOUS EFFECTS OF INVENTION

The inventive composition for forming a thin film for an energy storage device electrode has an excellent storage stability because it contains no conductive carbon material. By using the composition of the invention, an energy storage device electrode having an excellent bond strength between the current collector and the electrode mixture layer can be obtained. The energy storage device electrode of the invention can suppress battery degradation due to interfacial separation.

### DESCRIPTION OF EMBODIMENTS

### [Thin Film-Forming Composition]

The inventive composition for forming a thin film for an energy storage device electrode includes a cationic polymer and contains no conductive carbon material. As used herein, "conductive carbon material" refers to carbon materials which are in themselves electrically conductive, such as carbon black, ketjen black, acetylene black, carbon whiskers, carbon nanotubes (CNTs) carbon fibers, natural graphite and synthetic graphite.

The cationic polymer that is used may be suitably selected from among known cationic polymers and is preferably one having no anionic functional groups. In this invention, "having no anionic functional groups" means to have no anionic functional groups on the molecule--i.e., to be unable to assume a zwitterionic structure, and includes the form of a salt of a cation on the cationic polymer with a counteranion (e.g., an amine hydrochloride).

From the standpoint of better adhesion between the current collector and the electrode mixture layer, the cationic polymer preferably includes one or more selected from the following group: cationic polymers synthesized using dicyandiamide as the monomer, cationic polymers synthesized using diethylenetriamine as the monomer, cationic polymers synthesized using dicyandiamide and diethylenetriamine as the monomers, and cationic polymers synthesized using ethyleneimine as the monomer. The cationic polymer more preferably includes one or more selected from the group consisting of cationic polymers synthesized using dicyandiamide and diethylenetriamine as the monomers and cationic polymers synthesized using ethyleneimine as the monomer. The cationic polymer even more preferably includes one or more selected from polyethyleneimines which are cationic polymers synthesized using a dicyandiamide-diethylenetriamine condensate and ethyleneimine as the monomers, and is still more preferably a polyethyleneimine which is a cationic polymer synthesized using ethyleneimine as the monomer. The cationic polymer may be a copolymer which also includes monomer constituents other than the above monomer constituents.

These cationic polymers may be ones which are obtained by a known method of synthesis, or commercial products may be used. Illustrative examples of such commercial products include the Unisence series from Senka Corporation; and Epomin (polyethyleneimine) SP-003, SP-006, SP-012, SP-018, SP-020 and P-1000, as well as Polyment (aminoethylated acrylic polymer) NK-100PM, NM-200PM, NK-350 and NK-380, all from Nippon Shokubai Co., Ltd. In the Unisence series, preferred use can be made of Unisence KHP10P (a hydrochloride of a dicyandiamide-diethylenetriamine condensate).

The average molecular weight of the cationic polymer is not particularly limited. However, the number-average molecular weight (Mn) is preferably from 300 to 1,000,000, and more preferably from 50,000 to 300,000. In this invention, Mn is a polystyrene-equivalent value obtained by gel permeation chromatography using as the solvent an aqueous solution containing 0.5 mol/L of acetic acid and 0.5 mol/L of potassium nitrate.

From the standpoint of coatability, the cationic polymer content in the thin film-forming composition of the invention is preferably from 1 to 50 wt%, and more preferably from 1 to 10 wt%.

The solvent is not particularly limited, so long as it is one that can dissolve the cationic polymer. Illustrative examples include water and the following organic solvents: ethers such as tetrahydrofuran (THF), diethyl ether and 1,2-dimethoxyethane (DME); halogenated hydrocarbons such as methylene chloride, chloroform and 1,2-dichloroethane; amides such as N,N-dimethylformamide (DMF), N,N-dimethylacetamide (DMAc) and N-methyl-2-pyrrolidone (NMP); ketones such as acetone, methyl ethyl ketone, methyl isobutyl ketone and cyclohexanone; alcohols such as methanol, ethanol, n-propanol, isopropanol, n-butanol and tert-butanol; aliphatic hydrocarbons such as n-heptane, n-hexane and cyclohexane; aromatic hydrocarbons such as benzene, toluene, xylene and ethylbenzene; glycol ethers such as ethylene glycol monoethyl ether, ethylene glycol monobutyl ether and propylene glycol monomethyl ether; and glycols such as ethylene glycol and propylene glycol. One of these solvents may be used alone, or two or more may be used in admixture. In particular, as a solvent to be used in battery applications, it is preferable to include water or NMP. From the standpoint of lowering costs, it is preferable to include water as the solvent.

For the purposes of improving the coatability and lowering costs, these solvents may be used alone or two or more may be used in admixture. When a mixed solvent of water and an alcohol is used, the mixing ratio therebetween is not particularly limited, although it is preferable for the weight ratio (water : alcohol) to be from about 1:1 to about 10:1.

The thin film-forming composition may optionally include another polymer in order to increase the film strength. The other polymer is preferably one having no anionic functional groups. Illustrative examples of the other polymer include the following thermoplastic resins: fluoropolymers such as polyvinylidene fluoride (PVDF), polytetrafluoroethylene (PTFE), tetrafluoroethylene-hexafluoropropylene copolymers (P(TFE-HFP)), vinylidene fluoride-hexafluoropropylene copolymers (P(VDF-HFP)) and vinylidene fluoride-chlorotrifluoroethylene copolymers (P(VDF-CTFE)); polyolefin resins such as polyvinylpyrrolidone, ethylene-propylene-diene ternary copolymers, polyethylene (PE), polypropylene (PP), ethylene-vinyl acetate copolymers (EVA) and ethylene-ethyl acrylate copolymers (EEA); polystyrene resins such as polystyrene (PS), high-impact polystyrene (HIPS), acrylonitrile-styrene copolymers (AS), acrylonitrile-butadiene-styrene copolymers (ABS), methyl methacrylate-styrene copolymers (MS) and styrene-butadiene rubbers; polycarbonate resins, vinyl chloride resins, polyamide resins, polyimide resins, (meth)acrylic resins such as polymethyl methacrylate (PMMA); polyester resins such as polyethylene terephthalate (PET), polybutylene terephthalate, polyethylene naphthalate, polybutylene naphthalate, polylactic acid (PLA), poly-3-hydroxybutyric acid, polycaprolactone, polybutylene succinate and polyethylene succinate/adipate; polyphenylene ether resins, modified polyphenylene ether resins, polyacetal resins, polysulfone resins, polyphenylene sulfide resins, polyvinyl alcohol resins, polyglycolic acids, modified starches, cellulose acetate, carboxymethylcellulose (CMC), cellulose triacetate; chitin, chitosan and lignin; the following electrically conductive polymers: polyaniline and emeraldine base (the semi-oxidized form of polyaniline), polythiophene, polypyrrole, polyphenylene vinylene, polyphenylene and polyacetylene; and the following thermoset or photocurable resins: epoxy resins, urethane acrylate, phenolic resins, melamine resins, urea resins and alkyd resins. Because it is desirable to use water as the solvent in the thin film-forming composition, the other polymer is preferably a water-soluble polymer such as water-soluble cellulose ether, polyvinyl alcohol or polyethylene glycol.

The other polymer may be acquired as a commercial product. Illustrative examples of such commercial products include the Metolose® SH Series (hydroxypropylmethyl cellulose, from Shin-Etsu Chemical Co., Ltd.), the Metolose® SE Series (hydroxyethylmethyl cellulose, from Shin-Etsu Chemical Co., Ltd.), JC-25 (a fully saponified polyvinyl alcohol, from Japan Vam & Poval Co., Ltd.), JM-17 (an intermediately saponified polyvinyl alcohol, from Japan Vam & Poval Co., Ltd.) and JP-03 (a partially saponified polyvinyl alcohol, from Japan Vam & Poval Co., Ltd.).

The content of the other polymer, although not particularly limited, is preferably set to from about 0 wt% to about 50 wt%, and more preferably from about 0 wt% to about 30 wt%, of the composition.

The thin film-forming composition may include a crosslinking agent. The crosslinking agent is preferably one without anionic functional groups and preferably dissolves in the solvent that is used.

The crosslinking agent is exemplified by ketones capable of reacting with an amino group, alkyl halides, acryloyls, epoxy compounds, cyanamides, ureas, acids, acid anhydrides, acyl halides, and compounds having a functional group such as a thioisocyanate group, isocyanate group, aldehyde group or carbodiimide group; and by compounds having like crosslinkable functional groups which react with one another, such as hydroxyl groups (dehydration condensation), mercapto groups (disulfide bonding), ester groups (Claisen condensation), silanol groups (dehydration condensation), vinyl groups and acrylic groups. Specific examples of crosslinking agents include any of the following which exhibit crosslink reactivity in the presence of an acid catalyst: polyfunctional acrylates, tetraalkoxysilanes, monomers or polymers having a blocked isocyanate group, and monomers or polymers having a carbodiimide group.

Such crosslinking agents may be acquired as commercial products. Examples of commercial products include polyfunctional acrylates such as A-9300 (ethoxylated isocyanuric acid triacrylate, from Shin-Nakamura Chemical Co., Ltd.), A-GLY-9E (ethoxylated glycerine triacrylate (EO 9 mol), from Shin-Nakamura Chemical Co., Ltd.) and A-TMMT (pentaerythritol tetraacrylate, from Shin-Nakamura Chemical Co., Ltd.); tetraalkoxysilanes such as tetramethoxysilane (Tokyo Chemical Industry Co., Ltd.) and tetraethoxysilane (Toyoko Kagaku Co., Ltd.); blocked isocyanate group-containing polymers such as the Elastron® Series E-37, H-3, H38, BAP, NEW BAP-15, C-52, F-29, W-11P, MF-9 and MF-25K (DKS Co., Ltd.); and carbodiimide group-containing polymers such as the Carbodilite® Series SV-02, V-02-L2, V-02, V-04, E-01, E-02, E-03A and E-04 (Nisshinbo Chemical Inc.), Stabaxol®)Rhein Chemie and Stabilizer 700 (Raschig GmbH).

The content of the crosslinking agent varies according to, for example, the solvent used, the substrate used, the required viscosity and the required film shape, but is generally from 0.001 to 80 wt%, preferably from 0.01 to 50 wt%, and more preferably from 0.05 to 40 wt%, based on the cationic polymer.

The method of preparing the thin film-forming composition is not particularly limited. For example, preparation may be carried out by mixing together in any order the cationic polymer and the solvent, and also, where necessary, the other polymer and the crosslinking agent.

The thin film-forming composition for an energy storage device electrode of the invention is for use in forming a thin film to be employed in an energy storage device electrode. This thin film may be suitably used in particular as a thin film that is included in an undercoat layer interposed between a current collector and an electrode mixture layer.

### [Undercoat Layer]

The undercoat layer may be one that includes only a thin film obtained from the inventive composition or may include a thin film other than the foregoing thin film. Thin films other than the foregoing thin film are exemplified by the electrically conductive binding layer described in JP No. 5773097.

The coating weight of the undercoat layer per side of the current collector is not particularly limited, so long as the above-indicated film thickness is satisfied, but is preferably 1,000 mg/m² or less, more preferably 500 mg/m² or less, and even more preferably 300 mg/m² or less. To ensure the intended functions of the undercoat layer and to reproducibly obtain batteries having excellent characteristics, the coating weight of the undercoat layer per side of the current collector is set to preferably 1 mg/m² or more, more preferably 5 mg/m² or more, even more preferably 10 mg/m² or more, and still more preferably 15 mg/m² or more. The undercoat layer has a thickness which, although not particularly limited so long as the above coating weight is satisfied, is generally from about 1 nm to about 10 µm.

The coating weight of the undercoat layer in this invention is the ratio of the undercoat layer weight (mg) to the undercoat layer surface area (m²). In cases where the undercoat layer has been formed into a pattern, this surface area is the surface area of the undercoat layer alone and does not include the surface areas of those portions of the current collector that lie exposed below the patterned undercoat layer.

The weight of the undercoat layer can be determined by, for example, cutting out a test specimen of a suitable size from the undercoat foil and measuring its weight W⁰, stripping the undercoat layer from the undercoat foil and measuring the weight W¹ after the undercoat layer has been stripped off, and calculating the difference therebetween (W⁰ - W¹). Alternatively, the weight of the undercoat layer can be determined by first measuring the weight W² of the current collector, subsequently measuring the weight W³ of the undercoat foil on which the undercoat layer has been formed, and calculating the difference therebetween (W³ - W²).

The method used to strip off the undercoat layer may involve, for example, immersing the undercoat layer in a solvent which dissolves the undercoat layer or causes it to swell, and then wiping off the undercoat layer with a cloth or the like.

The coating weight can be adjusted by a known method. For example, in cases where the undercoat layer is formed by coating, the coating weight can be adjusted by varying the solids concentration of the coating liquid for forming the undercoat layer, the number of coating passes or the clearance of the coating liquid delivery opening in the coater. Here, "solids" refers to, of the coating liquid ingredients, those ingredients other than the solvent. When one wishes to increase the coating weight, this is done by making the solids concentration higher, increasing the number of coating passes or making the clearance larger. When one wishes to lower the coating weight, this is done by making the solids concentration lower, reducing the number of coating passes or making the clearance smaller.

### [Composite Current Collector]

A composite current collector can be obtained by forming the undercoat layer on at least one side of a current collector.

Current collectors that have hitherto been used in energy storage device electrodes may be used as the current collector. For example, copper, aluminum, titanium, stainless steel, nickel, gold, silver and alloys thereof, carbon materials, metal oxides and electrically conductive polymers may be used. However, when an electrode assembly is to be fabricated by welding such as ultrasonic welding, it is preferable to use a metal foil made of copper, aluminum titanium, stainless steel or an alloy thereof. Particularly in cases where the subsequently described energy storage device electrode of the invention is used as the negative electrode in a lithium-ion secondary battery, the use of aluminum is preferred when copper is used as the positive electrode. The thickness of the current collector, although not particularly limited, is preferably from 1 to 100 µm in this invention.

When the undercoat layer is composed solely of the above-described thin film, the thin film-forming method is exemplified by the method of applying the thin film-forming composition onto a current collector and air drying or drying under applied heat. Coating methods include spin coating, dip coating, flow coating, inkjet coating, casting, spray coating, bar coating, gravure coating, slit coating, roll coating, flexographic printing, transfer printing, brush coating, blade coating and air knife coating. Of these, from the standpoint of the efficiency of the coating operation and other considerations, inkjet coating, casting, dip coating, bar coating, blade coating, roll coating, gravure coating, flexographic printing and spray coating are preferred. In cases where the undercoat layer has a plurality of thin films that include the above-described thin film, the steps of applying a thin film-forming composition onto the current collector and drying the applied composition may be repeated in the order of the thin films to be formed.

The temperature when drying the applied composition under applied heat, although not particularly limited, is preferably from about 50°C to about 200°C, and more preferably from about 80°C to about 150°C.

### [Energy Storage Device Electrode]

The energy storage device electrode of the invention has the above-described composite current collector and an electrode mixture layer formed on the undercoat layer thereof.

### [Electrode Mixture Layer]

The electrode mixture layer can be formed by applying onto the undercoat layer an electrode slurry that contains an active material, a binder polymer and, optionally, a solvent, and then air-drying the applied slurry or drying the slurry under applied heat.

Any of the various types of active materials that have hitherto been used in energy storage device electrodes may be used as the active material. For example, in the case of lithium secondary batteries and lithium-ion secondary batteries, chalcogen compounds capable of adsorbing and releasing lithium ions, lithium ion-containing chalcogen compounds, polyanion compounds, elemental sulfur and sulfur compounds may be used as the positive electrode active material.

Illustrative examples of such chalcogen compounds capable of adsorbing and releasing lithium ions include FeS₂, TiS₂, MoS₂, V₂O₆, V₆O₁₃ and MnO₂.

Illustrative examples of lithium ion-containing chalcogen compounds include LiCoO₂, LiMnO₂, LiMn₂O₄, LiMo₂O₄, LiV₃O₈, LiNiO₂ and LiₓNi_{y}M_{1-y}O₂ (wherein M is one or more metal element selected from cobalt, manganese, titanium, chromium, vanadium, aluminum, tin, lead and zinc; and the conditions 0.05 ≤ x ≤ 1.10 and 0.5 ≤ y ≤ 1.0 are satisfied).

An example of a polyanion compound is lithium iron phosphate (LiFePO₄). Illustrative examples of sulfur compounds include Li₂S and rubeanic acid.

The following may be used as the active material in the negative electrode: alkali metals, alkali metal alloys, at least one elemental substance selected from among Group 4 to 15 elements of the periodic table which intercalate and deintercalate lithium ions, as well as oxides, sulfides and nitrides thereof, and carbon materials which are capable of reversibly intercalating and deintercalating lithium ions.

Illustrative examples of the alkali metals include lithium, sodium and potassium. Illustrative examples of the alkali metal alloys include Li-Al, Li-Mg, Li-Al-Ni, Na-Hg and Na-Zn.

Illustrative examples of the at least one elemental substance selected from among Group 4 to 15 elements of the periodic table which intercalate and deintercalate lithium ions include silicon, tin, aluminum, zinc and arsenic.

Illustrative examples of the oxides include tin silicon oxide (SnSiO₃), lithium bismuth oxide (Li₃BiO₄), lithium zinc oxide (Li₂ZnO₂), lithium titanium oxide (Li₄Ti₅O₁₂) and titanium oxide.

Illustrative examples of the sulfides include lithium iron sulfides (LiₓFeS₂ (0 ≤ x ≤ 3)) and lithium copper sulfides (LiₓCuS (0 ≤ x ≤ 3)).

Exemplary nitrides include lithium-containing transition metal nitrides, illustrative examples of which include LiₓM_{y}N (wherein M is cobalt, nickel or copper; 0 ≤ x ≤ 3, and 0 ≤ y ≤ 0.5) and lithium iron nitride (Li₃FeN₄).

Examples of carbon materials which are capable of reversibly intercalating and deintercalating lithium ions include natural graphite, synthetic graphite, carbon black, coke, glassy carbon, carbon fibers, carbon nanotubes, and sintered compacts of these.

In the case of electrical double-layer capacitors, a carbonaceous material may be used as the active material. The carbonaceous material is exemplified by activated carbon, such as activated carbon obtained by carbonizing a phenolic resin and then subjecting the carbonized resin to activation treatment.

A known material may be suitably selected and used as the binder polymer. Illustrative examples include fluorine atom-containing polymers such as PVDF, PTFE P(TFE-HFP), P(VDF-HFP) and P(VDF-CTFE), polyvinylpyrrolidone, polyvinyl alcohols, polyimides, polyamideimides, ethylene-propylene-diene ternary copolymers, styrene-butadiene rubbers, CMC, polyacrylic acid (PAA), organic salts and metal salts of PAA, anionic functional group-containing polymers such as polyamic acid, and electrically conductive polymers such as polyaniline. Of these, fluorine atom-containing polymers and anionic functional group-containing polymers are preferred because the adhesive strength with the current collector and the electrode mixture layer is excellent.

The amount of binder polymer added per 100 parts by weight of the active material is preferably from 0.1 to 20 parts by weight, and more preferably from 1 to 10 parts by weight.

The solvent is exemplified by the solvents mentioned above in connection with the thin film-forming composition. The solvent may be suitably selected from among these according to the type of binder, although NMP is preferred in the case of water-insoluble binders such as PVDF, and water is preferred in the case of water-soluble binders such as PAA.

The electrode slurry may also contain a conductive material. Illustrative examples of conductive materials include carbon black, carbon nanotubes, ketjen black, acetylene black, carbon whiskers, carbon fibers, natural graphite, synthetic graphite, titanium oxide, ruthenium oxide, aluminum and nickel.

The method of applying the electrode slurry is exemplified by methods similar to those for applying the above-described thin film-forming composition. The temperature when drying the applied electrode slurry under applied heat, although not particularly limited, is preferably from about 50°C to about 400°C, and more preferably from about 80°C to about 150°C.

The region where the electrode mixture layer is formed should be suitably set according to such considerations as the cell configuration of the device to be used and may be either the entire surface of the undercoat layer or a portion thereof. For example, for use in a laminate cell as an electrode assembly in which the metal tabs and the electrodes are bonded together by welding such as ultrasonic welding, it is preferable to form the electrode mixture layer by applying the electrode slurry to part of the undercoat layer surface in order to leave a welding region. In laminate cell applications in particular, it is preferable to form the electrode mixture layer by applying the electrode slurry to areas of the undercoat layer other than the periphery thereof.

The electrode mixture layer has a thickness which, taking into account the balance between battery capacity and resistance, is preferably from 10 to 500 µm, more preferably from 10 to 300 µm, and even more preferably from 20 to 100 µm.

The electrode mixture layer preferably includes an anionic functional group-containing compound. In this case, for example, the binder polymer may be the anionic functional group-containing compound, or the conductive material may be the anionic functional group-containing compound. Anionic functional group-containing binder polymers are exemplified by those mentioned above. Examples of anionic functional group-containing conductive materials include those wherein numerous acidic functional groups are retained on the surface by synthesis in an oxygen-containing atmosphere, those wherein acidic functional groups are introduced onto the surface by chemical oxidation treatment, thermal oxidation treatment or the like, and those obtained by the formation of a composite with an anionic surfactant or an anionic dispersant.

If necessary, the electrode may be pressed. A commonly employed method may be used as the pressing method, although a die pressing method or a roll pressing method is especially preferred. The pressing force, although not particularly limited, is preferably at least 0.1 kN/cm, and more preferably at least 0.2 kN/cm. The upper limit in the pressing force is preferably about 5 kN/cm, and more preferably about 3 kN/cm.

The energy storage device electrode of the invention may be used as the positive electrode or negative electrode in an energy storage device, although use as a negative electrode is especially preferred.

### [Energy Storage Device]

The energy storage device of the invention includes therein the above-described energy storage device electrode. More specifically, it is constructed of at least a pair of positive and negative electrodes, a separator interposed between these electrodes, and an electrolyte, with at least the positive electrode or the negative electrode being constructed of the above-described energy storage device electrode.

The energy storage device of the invention is exemplified by various types of energy storage devices, including lithium-ion secondary batteries, hybrid capacitors, lithium secondary batteries, nickel-hydrogen batteries and lead storage batteries.

This energy storage device is characterized by the use, as an electrode therein, of the above-described energy storage device electrode. Other constituent members of the device, such as the separator and the electrolyte, may be suitably selected from known materials.

Illustrative examples of the separator include cellulose-based separators and polyolefin-based separators. The electrolyte may be either a liquid or a solid, and moreover may be either aqueous or non-aqueous. The energy storage device electrode of the invention is capable of exhibiting a performance that is sufficient for practical purposes even when employed in devices that use a non-aqueous electrolyte.

The non-aqueous electrolyte is exemplified by non-aqueous electrolyte solutions obtained by dissolving an electrolyte salt in a non-aqueous organic solvent. Examples of the electrolyte salt include lithium salts such as lithium tetrafluoroborate, lithium hexafluorophosphate, lithium perchlorate and lithium trifluoromethanesulfonate; quaternary ammonium salts such as tetramethylammonium hexafluorophosphate, tetraethylammonium hexafluorophosphate, tetrapropylammonium hexafluorophosphate, methyltriethylammonium hexafluorophosphate, tetraethylammonium tetrafluoroborate and tetraethylammonium perchlorate; and lithium imides such as lithium bis(trifluoromethanesulfonyl)imide and lithium bis(fluorosulfonyl)imide.

Examples of the non-aqueous organic solvent include alkylene carbonates such as propylene carbonate, ethylene carbonate and butylene carbonate; dialkyl carbonates such as dimethyl carbonate, methyl ethyl carbonate and diethyl carbonate; nitriles such as acetonitrile; and amides such as dimethylformamide.

The configuration of the energy storage device is not particularly limited. Cells of various known configurations, such as cylindrical cells, flat wound prismatic cells, stacked prismatic cells, coin cells, flat wound laminate cells and stacked laminate cells, may be used.

When used in a coil cell, the above-described energy storage device electrode of the invention may be die-cut in a specific disk shape and used. For example, a lithium-ion secondary battery can be fabricated by setting the inventive electrode die-cut to a given shape on a coin cell cap to which a washer and a spacer have been welded, laying an electrolyte solution-impregnated separator of the same shape on top thereof, stacking a counterelectrode on top of the separator with the electrode mixture layer facing down, placing the coin cell case and a gasket thereon and sealing the cell with a coin cell crimper.

In a stacked laminate cell, use may be made of an electrode assembly obtained by welding a metal tab to, in an electrode where an electrode mixture layer has been formed on part or all of the undercoat layer surface, a region of the electrode where the undercoat layer has been formed and the electrode mixture layer has not been formed (welding region). In this case, the electrodes making up the electrode assembly may each be composed of a single plate or a plurality of plates, although a plurality of plates are generally used in both the positive and negative electrodes. The plurality of electrode plates used to form the positive electrode are preferably stacked in alternation one plate at a time with the plurality of electrode plates used to form the negative electrode. It is preferable at this time to interpose the above-described separator between the positive electrode and the negative electrode.

A metal tab may be welded at a welding region on the outermost electrode plate of the plurality of electrode plates, or a metal tab may be sandwiched and welded between the welding regions on any two adjoining electrode plates of the plurality of electrode plates. The metal tab material is not particularly limited, provided it is one that is commonly used in energy storage devices. Examples include metals such as nickel, aluminum, titanium and copper; and alloys such as stainless steel, nickel alloys, aluminum alloys, titanium alloys and copper alloys. Of these, from the standpoint of the welding efficiency, it is preferable for the tab material to include at least one metal selected from aluminum, copper and nickel. The metal tab is preferably in the form of a foil and has a thickness that is preferably from about 0.05 mm to about 1 mm.

Known methods for welding together metals may be used as the welding method. Examples include TIG welding, spot welding, laser welding and ultrasonic welding. Joining together the electrode and the metal tab by ultrasonic welding is preferred.

Ultrasonic welding methods are exemplified by a technique in which a plurality of electrode plates are placed between an anvil and a horn, the metal tab is placed at the welding region, and welding is carried out collectively by the application of ultrasonic energy; and a technique in which the electrode plates are first welded together, following which the metal tab is welded.

In this invention, with either of these methods, not only are the metal tab and the electrodes welded together at the welding region, the plurality of electrode plates are ultrasonically welded to one another. The pressure, frequency, output power, treatment time, etc. during welding are not particularly limited, and may be suitably set while taking into account, for example, the material used and the coating weight of the undercoat layer.

A laminate cell can be obtained by placing the electrode assembly produced as described above within a laminate pack, injecting the electrolyte solution described above, and subsequently heat sealing.

### EXAMPLES

Examples and Comparative Examples are given below to more fully illustrate the invention, although the invention is not limited by these Examples. The apparatuses used were as follows.
- Probe-type ultrasonicator:
   UIP1000, from Hielscher Ultrasonics GmbH
- Wire bar coater: PM-9050MC, from SMT Co., Ltd.
- Roll press: SA-602, from Takumi Giken
- Charge/discharge measurement system:
   TOSCAT 3100, from Toyo System Co., Ltd.
- Adhesion/Film peel analyzer:
   VERSATILE PEEL ANALYZER, from Kyowa Interface Science, Inc.
- Viscometer: TV-22, a cone/plate-type viscometer from Toki Sangyo Co., Ltd.

### [1] Preparation of Thin Film-Forming Composition

### [Example 1]

Thin Film-Forming Composition A was prepared as a uniform solution by mixing together 6.71 g of the cationic polymer Epomin P-1000 (from Nippon Shokubai Co., Ltd.; solids concentration, 29.8 wt%; monomer make-up: ethyleneimine) and 33.29 g of pure water.

### [Comparative Example 1-1]

The cationic polymer Epomin P-1000 (a polyethyleneimine from Nippon Shokubai Co., Ltd.; solids concentration, 29.8 wt%), in an amount of 4.19 g, and 44.56 g of pure water were mixed together, after which 1.25 g of CNTs (TC-2010, from Toda Kogyo Corporation), an electrically conductive carbon material, was added and mixed therein. The resulting mixture was sonicated for 10 minutes at 500 W using a probe-type ultrasonicator, thereby giving Thin Film-Forming Composition B as a uniform CNT dispersion.

### [Comparative Example 1-2]

PTPA-S of the formula shown below that was synthesized according to the method of Synthesis Example 2 in WO 2014/042080, in an amount of 0.5 g, 3.95 g of Aron 10H (Toagosei Co., Ltd.; a polyacrylic acid having a solids concentration of 25.3 wt%) and 95.10 g of a mixed solvent of water and isopropyl alcohol (IPA) (water : IPA = 1 : 5.5 (weight ratio)) were mixed together, after which 0.5 g of CNTs (NC-7000, from Nanocyl S.A.), an electrically conductive carbon material, was mixed therein. The resulting mixture was sonicated for 10 minutes at 500 W using a probe-type ultrasonicator, thereby giving Thin Film-Forming Composition C as a uniform CNT dispersion.

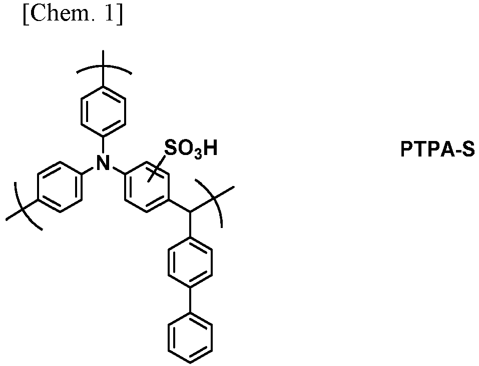

### [2] Production of Composite Current Collector

### [Example 2]

Thin Film-Forming Composition A was uniformly spread onto copper foil (thickness, 15 µm) as the current collector with a wire bar coater (OSP-2; wet film thickness, 2 µm) and then dried at 110°C for 20 minutes to form an undercoat layer composed of a single film, thereby producing Composite Current Collector A. The coating weight was measured and found to be 108 mg/m².

### [Comparative Example 2-1]

Aside from using Thin Film-Forming Composition B instead of Thin Film-Forming Composition A, Composite Current Collector B was produced in the same way as in Example 2. The coating weight was measured and found to be 103 mg/m².

### [Comparative Example 2-2]

Aside from using Thin Film-Forming Composition C instead of Thin Film-Forming Composition A and using a different wire bar coater (OSP-13, wet film thickness, 13 µm), Composite Current Collector C was produced in the same way as in Example 2. The coating weight was measured and found to be 140 mg/m².

### [3] Electrode Production and Bond Strength Evaluation

### [Example 3]

Synthetic graphite (MAG) as the active material, styrene-butadiene latex (SBR) and carboxymethyl cellulose (CMC) as the binders and water were mixed together, thereby preparing an electrode slurry (synthetic graphite : SBR : CMC = 97 : 1.5 : 1.5 (weight ratio)). The resulting electrode slurry was spread onto Composite Current Collector A to an electrode coating weight of 10 mg/cm² and then dried to form an active material layer on the undercoat layer, following which compression bonding was carried out with a roll press under a pressing force of 0.4 kN/cm, thereby producing Electrode A.

### [Comparative Example 3-1]

Aside from using Composite Current Collector B instead of Composite Current Collector A, Electrode B was produced in the same way as in Example 3.

### [Comparative Example 3-2]

Aside from using Composite Current Collector C instead of Composite Current Collector A, Electrode C was produced in the same way as in Example 3.

### [Comparative Example 3-3]

Aside from using plain copper foil instead of Composite Current Collector A, Electrode D was produced in the same way as in Example 3.

Electrodes A to D were each cut to a width of 25 mm, a 20 mm-wide double-sided tape was attached to the electrode mixture layer-coated side of the electrode, and the electrode was fastened to a glass substrate. This was set in an adhesion/film peel analyzer, a peel test was carried out at a peel angle of 90° and a peel rate of 100 mm/min, and the bond strength was measured. The results are shown in Table 1.

**[Table 1]**

| | Electrode | Polymer | Conductive carbon material | Bond strength before pressing (N/cm) | Bond strength after pressing (N/cm) |
|---|---|---|---|---|---|
| Example 3 | A | Epomin P-1000 | - | 0.191 | 0.238 |
| Comparative Example 3-1 | B | Epomin P-1000 | TC-2010 | 0.121 | 0.187 |
| Comparative Example 3-2 | C | PTPA-S/Aron 10H | NC-7000 | 0.059 | 0.081 |
| Comparative Example 3-3 | D | - | - | 0.082 | 0.125 |

### [4] Production of Secondary Batteries for Testing, and Evaluation of Cycle Characteristics

### [Example 4, Comparative Examples 4-1 to 4-3]

Four disk-shaped electrodes having a diameter of 10 mm were die-cut from each of Electrodes A to D, vacuum dried at 120°C for 15 hours and then transferred to a glovebox filled with argon. A stack of six pieces of lithium foil (Honjo Chemical Corporation; thickness, 0.17 mm) that had been die-cut to a diameter of 14 mm was set on a 2032 coin cell (Hohsen Corporation) cap to which a washer and a spacer had been welded, and one piece of separator (Celgard #2400, from Celgard KK) die-cut to a diameter of 16 mm that had been impregnated for at least 24 hours with an electrolyte solution (Kishida Chemical Co., Ltd.; an ethylene carbonate : dimethyl carbonate = 3 : 7 (volume ratio) solution containing 1 mol/L of the electrolyte lithium hexafluorophosphate and 20 vol% of the additive fluoroethylene carbonate) was laid on the foil. An electrode was then placed on top with the active material-coated side facing down. A single drop of the electrolyte solution was deposited thereon, after which the coin cell case and gasket were placed on top and sealing was carried out with a coin cell crimper. The cells were then left at rest for 24 hours, thereby producing four secondary batteries for testing.

The cycle characteristics of the secondary batteries for testing thus produced were evaluated. To evaluate the influence that the undercoat layer exerts on the battery, charge/discharge tests were carried out under the conditions shown in Table 2 using a charge-discharge measurement system. The results are shown in Table 3.

**[Table 2]**

| Step | 1 | 2 |
|---|---|---|
| | Aging | Evaluation of cycle characteristics |
| Charging conditions | 0.5C constant-current, constant-voltage charging | 0.5C constant-current, constant-voltage charging |
| Discharging conditions | 0.5C constant-current discharging | 0.5C constant-current discharging |
| Number of cycles | 5 | 50 |

]

| | |
|---|---|
| • Cut-off voltage: | 2.00 V - 0.01 V |
| • Number of test batteries: | four |
| • Temperature: | room temperature |

**[Table 3]**

| | Electrode | Polymer | Conductive carbon material | Capacity retention (%) 0.5C, 50 cycles |
|---|---|---|---|---|
| Example 4 | A | EpominP-1000 | - | 61 |
| Comparative Example 4-1 | B | Epomin P-1000 | TC-2010 | 60 |
| Comparative Example 4-2 | C | PTPA-S/Aron 10H | NC-7000 | 61 |
| Comparative Example 4-3 | D | - | - | 51 |

### [5] Preparation of Thin Film-Forming Composition

### [Example 5]

Thin Film-Forming Composition D was prepared as a uniform solution by mixing together 0.57 g of the cationic polymer Epomin P-1000 (Nippon Shokubai Co., Ltd.; solids concentration, 29.8 wt%; monomer make-up: ethyleneimine) and 2.80 g of pure water, and then adding thereto a solution obtained by mixing together 0.83 g of Carbodilite SV-02 (Nisshinbo Chemical Inc.; solid concentration, 40.0 wt%) and 5.81 g of pure water.

### [6] Production of Composite Current Collector

### [Example 6]

Aside from using Thin Film-Forming Composition D instead of Thin Film-Forming Composition A, Composite Current Collector D was produced in the same way as in Example 2. The coating weight was measured and found to be 95 mg/m².

### [7] Electrode Production and Bond Strength Evaluation

### [Example 7-1]

Silicone monoxide (SiO) as the active material, PAA0.8Li0.2 that was 20% neutralized with an aqueous solution of LiOH as the binder, acetylene black (AB) as a conductive additive and water were mixed together, thereby preparing an electrode slurry (SiO : graphite : PAA0.8Li0.2 : AB = 24.8 : 57.8 : 12.5:5 (wt ratio)). The resulting electrode slurry was spread onto Composite Current Collector A to an electrode coating weight of 4 mg/cm² and then dried at 80°C for 30 minutes and at 120°C for another 30 minutes to form an active material layer on the undercoat layer, after which compression bonding was carried out with a roll press under a pressing force of 0.2 kN/cm, thereby producing Electrode E.

### [Example 7-2]

Aside from using Composite Current Collector D instead of Composite Current Collector A, Electrode F was produced in the same way as in Example 7-1.

### [Comparative Example 5-1]

Aside from using Composite Current Collector B instead of Composite Current Collector A, Electrode G was produced in the same way as in Example 7-1.

### [Comparative Example 5-2]

Aside from using Composite Current Collector C instead of Composite Current Collector A, Electrode H was produced in the same way as in Example 7-1.

### [Comparative Example 5-3]

Aside from using plain copper foil instead of Composite Current Collector A, Electrode I was produced in the same way as in Example 7-1.

Electrodes E to I were each cut to a width of 25 mm, a 20 mm-wide double-sided tape was attached to the electrode mixture layer-coated side of the electrode, and the electrode was fastened to a glass substrate. This was set in an adhesion/film peel analyzer, a peel test was carried out at a peel angle of 90° and a peel rate of 100 mm/min, and the bond strength was measured. The results are shown in Table 4.

**[Table 4]**

| | Electrode | Polymer | Conductive carbon material | Bond strength before pressing (N/cm) | Bond strength after pressing (N/cm) |
|---|---|---|---|---|---|
| Example 7-1 | E | Epomin P-1000 | - | 0.584 | 0.647 |
| Example 7-2 | F | EpominP-1000/ Carbodilite SV-02 | - | 0.476 | 0.552 |
| Comparative Example 5-1 | G | Epomin P-1000 | TC-2010 | 0.436 | 0.562 |
| Comparative Example 5-2 | H | PTPA-S/Aron 10H | NC-7000 | 0.342 | 0.440 |
| Comparative Example 5-3 | I | - | - | 0.220 | 0.311 |

### [8] Production of Secondary Batteries for Testing, and Evaluation of Cycle Characteristics

### [Examples 8-1 and 8-2, Comparative Examples 6-1 to 6-3]

Four disk-shaped electrodes having a diameter of 10 mm were die-cut from each of Electrodes E to I, and vacuum dried at 120°C for 15 hours. A piece of lithium foil (Honjo Chemical Corporation; thickness, 0.17 mm) that had been die-cut to a diameter of 14 mm was set on a 2032 coin cell (Hohsen Corporation) cap to which a washer and a spacer had been welded, and one glass fiber filter (GE Healthcare Japan Corporation; GF/F, 90 mm) die-cut to a diameter of 16 mm was laid on the foil. Next, 300 µL of an electrolyte solution (Kishida Chemical Co., Ltd.; an ethylene carbonate : ethyl methyl carbonate = 1 : 3 (volume ratio) solution containing 1 mol/L of the electrolyte lithium hexafluorophosphate and 2 vol% of the additive vinylene carbonate) was added dropwise, and an electrode was placed on top with the active material-coated side facing down. A coin cell case to which a washer and a spacer had been welded was placed on top and sealing was carried out with a coin cell crimper. The cells were then left at rest for 15 hours, thereby producing four secondary batteries for testing.

The cycle characteristics of the secondary batteries for testing thus produced were evaluated. To evaluate the influence that the undercoat layer exerts on the battery, charge/discharge tests were carried out under the conditions shown in Table 5 using a charge-discharge measurement system. The results are shown in Table 6.

**[Table 5]**

| Step | 1 | 2 | 3 |
|---|---|---|---|
| | Aging | | Evaluation of cycle characteristics |
| Charging conditions | 0.05C constant-current, constant-voltage charging | 0.1C constant-current, constant-voltage charging | 1C constant-current, constant-voltage charging |
| Discharging conditions | 0.1C constant-current discharging | 0.1C constant-current discharging | 1C constant-current discharging |
| Number of cycles | 1 | 4 | 30 |

| | |
|---|---|
| • Cut-off voltage: | 1.50 V - 0.005 V |
| • Number of test batteries: | four |
| • Temperature: | room temperature |

**[Table 6]**

| | Electrode | Polymer | Conductive carbon material | Capacity retention (%) 1C, 30 cycles |
|---|---|---|---|---|
| Example 8-1 | E | Epomin P-1000 | - | 59 |
| Example 8-2 | F | Epomin P-1000/ Carbodilite SV-02 | - | 58 |
| Comparative Example 6-1 | G | Epomin P-1000 | TC-2010 | 60 |
| Comparative Example 6-2 | H | PTPA-S/Aron 10H | NC-7000 | 53 |
| Comparative Example 6-3 | I | - | - | 52 |

### [9] Evaluation of Storage Stability and Coatability of Thin-Film-Forming Compositions

### [Examples 9-1 and 9-2, Comparative Example 7]

The coatabilities of composite current collectors that were respectively produced using Thin Film-Forming Compositions A, B and D immediately following preparation and the coatabilities of composite current collectors that were respectively produced using Thin Film-Forming Compositions A, B and D after these were left at rest for 7 days at room temperature in an open-air atmosphere were visually evaluated. The coatability was rated as "O" when the composition can be uniformly applied and was rated as "X" when uniform coating is impossible because some aggregates are observable. The results are shown in Table 7.

In addition, the viscosities of Thin Film-Forming Compositions A, B and D, both immediately following preparation and after being left at rest for 7 days at room temperature in an open-air environment, were measured using a viscometer. The results are shown in Table 7.

**[Table 7]**

| | Polymer | Conductive carbon material | Appearance of coated surface | | Viscosity (mPa·s) | |
|---|---|---|---|---|---|---|
| | | | Day 0 | Day 7 | Day 0 | Day 7 |
| Example 9-1 | Epomin P-1000 | - | ○ | ○ | 6.70 | 6.66 |
| Example 9-2 | Epomin P-1000/ Carbodilite SV-02 | - | ○ | ○ | 2.56 | 2.54 |
| Comparative Example 7 | Epomin P-1000 | TC-2010 | ○ | × | 3.40 | 10.14 |

From the above results, because the thin film-forming compositions of the invention contain no electrically conductive carbon material, a loss of uniformity due to, for example, the aggregation of a conductive carbon material does not arise. Hence, it is apparent that the compositions themselves are stable. In addition, the undercoat layers of the invention obtained from these compositions have a high adhesion to the active material and, although they contain no conductive carbon material, were found to have cycle characteristics comparable with those of conductive carbon material-containing undercoat layers.

## Claims

1. A composition for forming a thin film for an energy storage device electrode, which composition comprises a cationic polymer and contains no electrically conductive carbon material.

2. The composition for forming a thin film for an energy storage device electrode of claim 1, which composition is for use in forming a thin film interposed between a current collector and an electrode mixture layer in an energy storage device electrode.

3. The composition for forming a thin film for an energy storage device electrode of claim 1 or 2, wherein the cationic polymer includes at least one selected from the group consisting of cationic polymers obtained using dicyandiamide as the monomer, cationic polymers obtained using diethylenetriamine as the monomer, cationic polymers obtained using dicyandiamide and diethylenetriamine as the monomers, and cationic polymers obtained using ethyleneimine as the monomer.

4. The composition for forming a thin film for an energy storage device electrode of any one of claims 1 to 3, wherein the cationic polymer is a cationic polymer obtained using ethyleneimine as the monomer.

5. The composition for forming a thin film for an energy storage device electrode of any one of claims 1 to 4, further comprising a crosslinking agent.

6. An undercoat layer comprising a thin film obtained from the thin film-forming composition of any one of claims 1 to 5.

7. A composite current collector for an energy storage device electrode, comprising a current collector and the undercoat layer of claim 6 formed on at least one side of the current collector.

8. The composite current collector for an energy storage device electrode of claim 7, wherein the coating weight of the undercoat layer per side of the current collector is 1,000 mg/m² or less.

9. The composite current collector for an energy storage device electrode of claim 7 or 8, wherein the current collector is copper foil or aluminum foil.

10. The composite current collector for an energy storage device electrode of claim 9, wherein the current collector is copper foil.

11. An energy storage device electrode comprising the composite current collector for an energy storage device electrode of any one of claims 7 to 10 and an electrode mixture layer formed on the undercoat layer.

12. The energy storage device electrode of claim 11 which is a negative electrode.

13. An energy storage device comprising the energy storage device electrode of claim 11 or 12.
